# EUROPÄISCHE PATENTSCHRIFT

(11) **EP 2 212 714 B1**
(45) Veröffentlichungstag und Bekanntmachung des Hinweises auf die Patenterteilung: **17.08.2011**
(21) Anmeldenummer: 08851698.4
(22) Anmeldetag: 19.09.2008
(51) Int. Cl.: G01S 13/48, G01S 13/42, G01S 13/87

(54) **VERFAHREN ZUM AUSTAUSCH VON RADARSIGNALEN**
METHOD FOR EXCHANGING RADAR SIGNALS
PROCÉDÉ POUR ÉCHANGER DES SIGNAUX RADAR

(30) Priorität: 19.11.2007 DE 102007055185
(43) Veröffentlichungstag der Anmeldung: 04.08.2010
(73) Patentinhaber: Robert Bosch GmbH, 70442 Stuttgart (DE)
(72) Erfinder: FOCKE, Thomas, 31180 Ahrbergen (DE)
(86) Internationale Anmeldenummer: PCT/EP2008/062543
(87) Internationale Veröffentlichungsnummer: WO 2009/065640

(56) Entgegenhaltungen:
- EP-A- 1 557 690
- DE-A1-102004 046 634
- DE-A1-102004 053 419
- US-A- 6 043 772
- US-A- 6 137 434
- US-A1- 2007 222 662
- US-B1- 6 462 700

## Beschreibung

Die Erfindung betrifft ein Verfahren zum Austausch von Radarsignalen, eine Anordnung zum Austausch von Radarsignalen, ein Computerprogramm und ein Computerprogrammprodukt.

### Stand der Technik

Die Entwicklung von sog. standalone und somit alleinstehenden Radar-Transceiver Chips in Silizium-Germanium Halbleitertechnologie wird zur Zeit bei vielen Systemanbietem vorangetrieben, so dass derartige Chips in naher Zukunft für verschiedene Anwendungen verfügbar sein werden. Ein Ziel dieser Entwicklungen ist es, kleine und preiswerte Systemkomponenten bereitzustellen. Derartige Systemkomponenten bzw. Chips lassen sich bspw. als Einchip-Radar bzw. in einer Arrayanordnung als MultiChip Radar betreiben. In Vorrichtungen für MultiChip Radar kann durch Zusammenschaltung identischer Chips mit identischem fest verkoppelten Übertragungsverhalten in einer definierten geometrischen Anordnung durch Beamforming bzw. Strahlenformung eine Verstärkung einer ausgesendeten und empfangbaren Leistung erreicht werden.

Aus der Druckschrift US 2005/0151215 A1 ist eine Antennenanordnung mit einem zum Senden und Empfangen elektromagnetischer Wellen ausgebildeten Chip bekannt. Hierbei ist ein derartiger Chip direkt auf einem Schaltkreis der Antennenanordnung befestigt, wobei ein Kontakt zwischen dem Chip und dem Schaltkreis über eine Vielzahl miteinander verbundener chipseitiger sowie schaltkreisseitiger Kontaktelemente bereitgestellt ist.

Die Druckschrift EP 1 557 690 A1 beschreibt eine Radarvorrichtung und ein Verfahren zum Austausch von Radarsignalen, wobei die Anordnung eine Anzahl Radar-Transceiver-Chips aufweist. Für jeden Chip kann ein räumlicher Erfassungsbereich für Radarsignale derart eingestellt werden, dass für die gesamte Anordnung gleichzeitig mehrere Erfassungsbereiche abgedeckt werden.

Die Druckschrift US 6 137 434 A beschreibt ein Radarsystem mit einem Radarmodul, das mehrere Radarsignale verarbeiten kann, wobei n Kanäle zum Senden von hochfrequenten Signalen und zum Empfangen von Echosignalen vorgesehen sind. Mit einem Radarschaltkreis wird ein Abstand eines Objekts, dass die Echosignale erzeugt, erfasst.

Aus der Druckschrift US 6 462 700 B1 ist ein asymmetrischer Mehrstrahl-Radarsensor bekannt, der mindestens zwei Felder bzw. Patches zum Senden und Empfangen auf einem Träger aufweist. weiterhin sind zugeordnete Polyrod- oder dielektrische Linsen bereitgestellt. Der Sensor ist derart eingerichtet, dass zumindest ein Strahl von einem sendenden Strahl und einem empfangenden Strahl einen asymmetrischen Strahlengang hat. Auf diese Weise wird bei einer Winkelmessung der durchschnittliche Fehlerbetrag verringert.

In der Druckschrift DE 10 2004 046634 A1 ist ein Antennenradarsystem beschrieben, das eine Nahbereichsfunktion und eine von der Nahbereichsfunktion getrennt angeordnete Fernbereichsfunktion umfasst, wobei die Nahbereichsfunktion und die Fernbereichsfunktion eine jeweils unterschiedliche Antennenapertur aufweisen. Weiterhin umfasst das Antennenradarsystem Mittel zur gegenseitigen Kreuzpolarisation von Signalen, die mittels der Nahbereichsfunktion und der Fernbereichsfunktion ausgestrahlt und empfangen werden. Dadurch wird eine möglichst effiziente signaltechnische Entkopplung zwischen der Nahbereichsfunktion und der Fernbereichsfunktion erreicht.

### Offenbarung der Erfindung

Die Erfindung betrifft ein Verfahren zum Austauschen von Radarsignalen gemäß Anspruch 1. Hierbei ist vorgesehen, dass für eine Anordnung, die eine Anzahl Radar-Transceiver Chips aufweist, für jeden Chip ein Erfassungsbereich für Radarsignale derart eingestellt wird, dass für die gesamte Anordnung gleichzeitig mehrere Erfassungsbereiche für Radarsignale abgedeckt werden. Es ist vorgesehen, dass Frequenzen der Radarsignale entkoppelt werden. Somit ergibt sich u.a., dass mit den unterschiedlich eingestellten bzw. geschalteten Chips mehrere, typischerweise unterschiedliche Signalformen für Radarsignale bearbeitet werden können.

In Ausgestaltung wird hierbei für jeden Chip ein Erfassungsbereich individuell geschaltet. Dies kann je nach Anwendung auch bedeuten, dass mehrere Chips zur Verstärkung für denselben Erfassungsbereich geschaltet werden.

Je nach Anforderung können die Chips der Anordnung funktionell zusammengeschaltet werden. Das Verfahren kann auch bei laufendem Betrieb der Anordnung durchgeführt werden, so dass es möglich ist, die in der Regel unterschiedlichen Erfassungsbereiche für die Radarsignale jederzeit anwendungsbezogen einzustellen.

In Ausgestaltung kann jeder Radar-Transceiver Chips individuell eingestellt werden, so dass jeder Chip Radarsignale einer bestimmten ausgewählten Frequenz austauscht und somit empfängt und/oder sendet. Somit kann die gesamte Anordnung verschiedene Radarsignale auf unterschiedlichen Frequenzen austauschen.

Die Erfindung betrifft weiterhin eine Anordnung zum Austausch von Radarsignalen gemäß Anspruch 5, die eine Anzahl Radar-Transceiver Chips aufweist. Bei dieser Anordnung ist für jeden Chip ein Erfassungsbereich für Radarsignale derart einstellbar, dass für die gesamte Anordnung gleichzeitig mehrere Erfassungsbereiche für Radarsignale abdeckbar sind.

Diese Anordnung entspricht funktionell einer Antenne und ist zum Senden und/oder zum Empfangen von Radarsignalen ausgebildet. Durch modulares Einstellen und/oder Schalten der Chips kann die Anordnung zum Empfangen und/oder Senden von Radarsignalen für unterschiedliche Erfassungsbereiche mit mehreren Signalformen und bei unterschiedlichen Frequenzen üblicherweise betriebsbegleitend modular eingestellt werden. Somit sind in dieser Anordnung durch Vorsehen der Radar-Transceiver Chips mehrere Radarsensoren für unterschiedliche Erfassungsbereiche bei Radarsignalen auf unterschiedlichen Frequenzen flexibel vereint.

Weiterhin wird mit der Anordnung u.a. ein Sensormultiplex bzw. ein Sensorauswahlschaltnetz für verschiedene Radarsignale bereitgestellt, bei dem bspw. eine phasenstarre Überlagerung einer für eine Anwendung gewünschte Richtcharakteristik als einzustellender Erfassungsbereich bereitstellbar ist. Mit der Erfindung ist bspw. eine flexible Zusammenschaltung einzelner Radar-Transceiver Chips bzw. Sende-Empfangs-Schaltkreise zur variablen Gestaltung eines modular aus mehreren Empfangsbereichen modular bereitgestellten Erfassungsbereichs möglich. Folglich wird durch mindestens einen Chip der Anordnung mindestens ein Radarsignal auf einer Frequenz unter Bereitstellung mindestens eines Empfangsbereichs bereitgestellt. Dies bedeutet auch, dass Gruppen einzelner Chips gemeinsam mehrere Radarsignale auf einer Frequenz unter Nutzung von Synergieeffekten zu einem vergrößerten Empfangsbereich mit verstärkter Leistung zusammenfassen können.

Die beschriebene Anordnung ist dazu geeignet, sämtliche Schritte des vorgestellten Verfahrens durchzuführen. Dabei können einzelne Schritte dieses Verfahrens auch von einzelnen Komponenten der Anordnung durchgeführt werden. Weiterhin können Funktionen der Anordnung oder Funktionen von einzelnen Komponenten der Anordnung als Schritte des Verfahrens umgesetzt werden.

Die Erfindung betrifft weiterhin ein Computerprogramm mit Programmcodemitteln, um alle Schritte eines beschriebenen Verfahrens durchzuführen, wenn das Computerprogramm auf einem Computer oder einer entsprechenden Recheneinheit, insbesondere in einer vorgestellten Anordnung, ausgeführt wird.

Das erfindungsgemäße Computerprogrammprodukt mit Programmcodemitteln, die auf einem computerlesbaren Datenträger gespeichert sind, ist zum Durchführen aller Schritte eines beschriebenen Verfahrens ausgebildet, wenn das Computerprogramm auf einem Computer oder einer entsprechenden Recheneinheit, insbesondere in einen erfindungsgemäßen Anordnung, ausgeführt wird.

Durch die technische Gegebenheit, die Radar-Transceiver Chips mit unterschiedlichen Sendesignalformen zur Bereitstellung der Erfassungsbereiche zu betreiben, lassen sich innerhalb der Anordnung Gruppen von Chips im laufenden Betrieb flexibel funktional zusammenschalten. Damit entsteht eine skalierbare bzw. in ihrer Größe veränderbare Funktionalität der Anordnung als ein Gesamtradarsensor, wobei die Funktionalität bei einer möglichen Anwendung an eine jeweilige Verkehrssituation angepasst werden kann. Dies kann auf Basis sehr preiswerter Standardeinzelkomponenten und folglich Chips geschehen. Die Frequenzen zum Senden und/oder Empfang können im laufenden Betrieb eines im Rahmen der Erfindung bereitgestellten Sensormultiplex als Ausgestaltung der Anordnung entkoppelt werden, eine Aktivierung oder Deaktivierung über Umschalter ist hier nicht erforderlich.

In einer Ausführung der Erfindung ist vorgesehen, dass eine feste Anordnung von Radar-Transceiver Chips und somit eine Arrayanordnung in einem Radarsensorgehäuse vorgesehen ist und dass eine Empfangssignalauswertung derart erfolgt, dass eine phasenstarre Überlagerung der Sende- bzw. Empfangssignale eine gewünschte Richtcharakteristik des Sensors für Radarstrahlen ergibt.

Weiterhin können die Radar-Transceiver Chips so gestaltet werden, dass sie bzgl. ihrer Frequenzen zum Senden und/oder Empfangen sowie ihrer Modulationsverfahren so flexibel ausgebildet sind, dass mehrere derartige Chips in einer festen Anordnung u. a. zeitgleich sowohl identische Signale aussenden und/oder empfangen, als auch völlig entkoppelt auf unterschiedlichen Frequenzen und mit unterschiedlichen Modulationsverfahren arbeiten können. Dadurch lassen sich typischerweise mehrere Radarsensoren durch einen Radarsensor bereitstellen. Dies ermöglicht es, unterschiedliche dynamische Kenngrößen für Erfassungsbereiche, wie bspw. Entfernungsauflösung, Geschwindigkeitsauflösung oder Beschleunigungsauflösung, in unterschiedlichen Raumrichtungen bereitzustellen.

In einer Ausgestaltung der Erfindung lassen sich durch unterschiedliche Mittenfrequenzen einzelne Rampen und/oder Modulationsverfahren über Untergruppen aus Modulen bzw. Einzelmodulen und somit Chips bilden, die jede für sich wiederum eine eigene Richtcharakteristik aufweist. Sind Frequenzen in einem bestimmten, ausreichend großen Frequenzabstand vorgesehen, so lassen sich im Empfangsfall die Signale der einzelnen Untergruppen über Filter voneinander trennen, die resultierenden Richtcharakteristiken sind dann voneinander entkoppelt. Ein analoges Vorgehen ist auch beim Aussenden bei verschiedenen Frequenzen möglich.

In einem Fall kann jedes Modul bzw. jeder Chip auf seiner eigenen Frequenz arbeiten, so dass eine Anzahl von n über die Chips bereitgestellten Einzelsensoren vorliegt, wobei jeder Einzelsensor für sich in Ausgestaltung zwar eine geringe Reichweite, dafür aber einen breiten Sichtbereich aufweist. Die Anzahl der an einer Untergruppe beteiligten Module bzw. Chips richtet sich nach der jeweiligen Funktion, bzw. einem Verkehrszustand oder einer Verkehrssituation bzw. einer Empfangssignalsituation, in der sich ein Fahrzeug, dass die Anordnung aufweist, befindet. Dadurch wird in der Regel ein interessierender Erfassungsbereich bestimmt.

Im Rahmen der Erfindung ist auch die Möglichkeit gegeben, jede beliebige Konfiguration, also auch verschachtelte Konfigurationen, zu erzeugen und folglich nicht nur benachbarte Module funktional zusammenzuschalten. Demnach können mindestens zwei Chips, zwischen denen innerhalb der Anordnung mindestens ein weiterer Chip angeordnet ist, so dass diese mindestens zwei Chips durch den mindestens einen Chip beabstandet sind, funktional zusammengeschaltet werden. Ein derartiges funktionales Zusammenschalten von Chips ist in der Anordnung demnach positionsunabhängig möglich. Weiterhin ist eine Synchronisation der Chips sowie eine Behebung von Mehrdeutigkeitseffekten durch geeignete Signalverarbeitung empfangener und/oder gesendeter Radarsignale möglich.

Zahlreiche Funktionen in der Fahrzeug-Umfeldsensorik, die auf Radartechnologie basieren, erfordern üblicherweise eine Abdeckung unterschiedlicher Erfassungsbereiche sowohl bzgl. dynamischer Größen wie Entfernung und/oder Geschwindigkeit als auch hinsichtlich eines Winkel. Gleichzeitig stellt aber die Entwicklung unterschiedlicher spezieller Radarsensoren einen erheblichen Kostenfaktor dar.

Die Erfindung ermöglicht in einer Anwendung die flexible und kostengünstige Zusammenschaltung von fest angeordneten Standard-Radar-Transceiver Chips, die als Germanium-Silizium Halbleiter ausgebildet sein können, um unterschiedliche Richtcharakteristiken und Strahl- bzw. Beam-Multiplexkonstellationen zur Bereitstellung von Erfassungsbereichen zu realisieren.

Weiterhin wird ein flexibler Sensormultiplex zur Durchführung von Spektralmessungen mit einem zugehörigen Ortungsfeld als Erfassungsbereich bereitgestellt. Die Erfindung kann bspw. bei einer Radarsensorik zur Fahrzeugumfelderfassung eingesetzt werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

- Figur 1: zeigt in schematischer Darstellung eine erste Ausgestaltung einer Anordnung mehrerer Radar-Transceiver Chips mit einem zugehörigen Sende-Signalschema in einem ersten Betriebsmodus.
- Figur 2: zeigt in schematischer Darstellung ein exemplarisches Richtdiagramm für den ersten Betriebsmodus nach Figur 1.
- Figur 3: zeigt in schematischer Darstellung eine zweite Ausgestaltung einer Anordnung mehrerer Radar-Transceiver Chips mit einem zugehörigen Sende-Signalschema in einem zweiten Betriebsmodus.
- Figur 4: zeigt in schematischer Darstellung ein exemplarisches Richtdiagramm für den zweiten Betriebsmodus aus Figur 3.

### Ausführungsformen der Erfindung

Die Erfindung ist anhand von Ausführungsformen in den Zeichnungen schematisch dargestellt und wird im folgenden unter Bezugnahme auf die Zeichnungen ausführlich beschrieben.

Die Figuren werden zusammenhängend und übergreifend beschrieben, gleiche Bezugszeichen bezeichnen gleiche Komponenten.

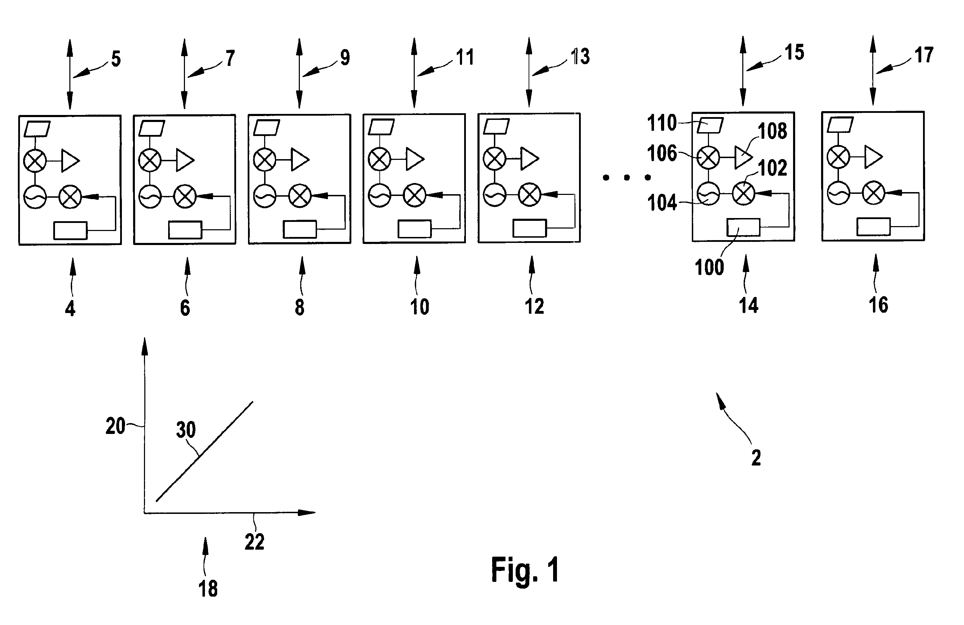

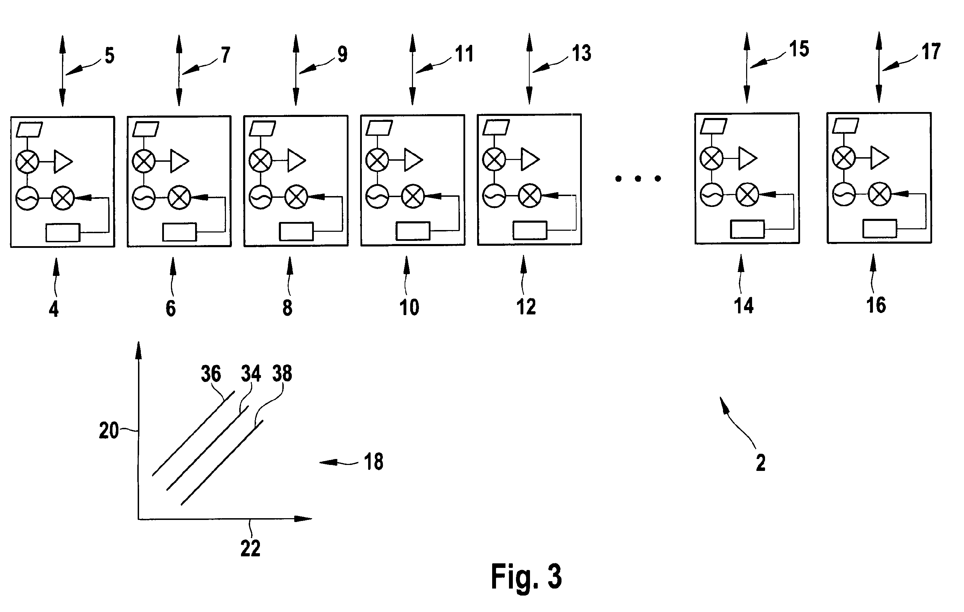

Die Figuren 1 und 3 zeigen jeweils eine Anordnung 2, die eine Anzahl als Array bzw. Feld zusanvnengeschalteter Radar-Transceiver Chips 4, 6, 8, 10, 12, 14, 16 aufweist, wobei jeweils nur sieben dieser Radar-Transceiver Chips 4, 6, 8, 10, 12, 14, 16 dargestellt sind.

Hierbei ist vorgesehen, dass ein erster Chip 4 dazu ausgebildet ist, ein erstes Radarsignal 5 auszutauschen, ein zweiter Chip 6 ist dazu ausgebildet, ein zweites Radarsignal 7 auszutauschen, ein dritter Chip 8 ist dazu ausgebildet, ein drittes Radarsignal 9 auszutauschen, ein vierter Chip 10 ist dazu ausgebildet, ein viertes Radarsignal 11 auszutauschen, ein fünfter Chip 12 ist dazu ausgebildet, ein fünftes Radarsignal 13 auszutauschen, ein sechster Chip 14 ist dazu ausgebildet, ein sechstes Radarsignal 15 auszutauschen und ein siebter Chip 16 ist dazu ausgebildet, ein siebtes Radarsignal 17 auszutauschen. Ein derartiges Austauschen jeweils eines Radarsignals 5, 7, 9, 11, 13, 15, 17 durch jeweils einen Chip 4, 6, 8, 10, 12, 14, 16 umfasst die Möglichkeit, dass ein jeweiliges Radarsignal 5, 7, 9, 11, 13, 15, 17 auf einer Frequenz sowohl empfangen als auch gesendet werden kann.

Anhand der sechsten Chips 14 sollen weiterhin die Komponenten sämtlicher, hier identisch aufgebauter Chips 4, 6, 8, 10, 12, 14, 16 beschrieben werden. Diese umfassen einen phasengesteuerten Regelkreis 100 (PLL: phase locked loop), der hier mit einem Schaltkreis, der einen ersten Mischer 102, eine HF-Signalquelle 104 zur Bereitstellung eines Hochfrequenzsignals, einen zweiten Mischer 106, einen Treiber 108 sowie ein Antennenmodul 110 zum Senden und Empfangen von Radarsignalen 5, 7, 9, 11, 13, 15, 17 aufweist, zusammengeschaltet wird.

Außerdem zeigen die Figuren 1 und 3 jeweils ein Modulations-Diagramm 18, bei dem eine Frequenzachse 20 über einer Zeitachse 22 aufgetragen ist.

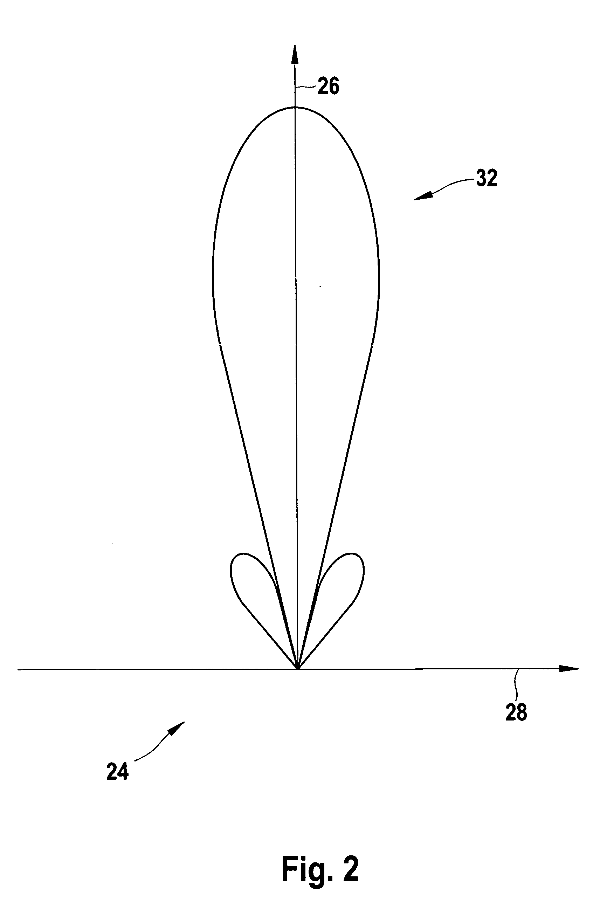

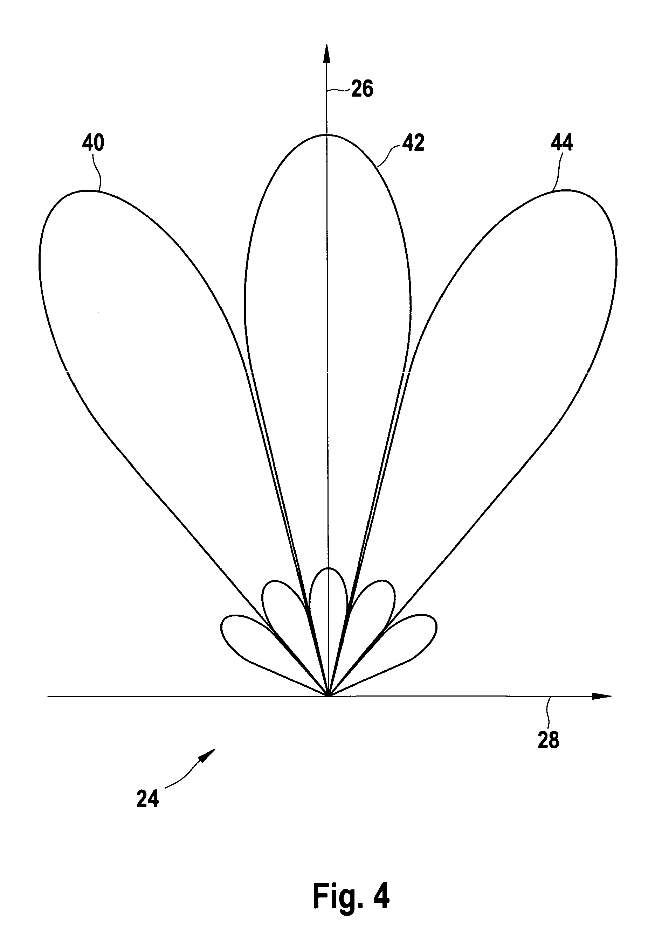

In den beiden Richtdiagrammen 24 aus den Figuren 2 und 4, die zur Darstellung von Erfassungsbereichen der anhand der Figuren 1 und 3 beschriebenen Betriebsmodi vorgesehen sind, ist jeweils eine vertikal orientierte Achse 26 für eine Leistung P über einer horizontal orientierten Achse 28 für einen Winkel φ aufgetragen.

Figur 1 zeigt in schematischer Darstellung einen generischen Ansatz mehrerer Radar-Transceiver Chips 4, 6, 8, 10, 12, 14, 16 der Anordnung 2, wobei alle Chips 4, 6, 8, 10, 12, 14, 16 in einem ersten Betriebsmodus gleichzeitig auf derselben Frequenz Radarsignale 5, 7, 9, 11, 13, 15, 17 senden und empfangen und folglich phasenstarr miteinander gekoppelt sind. Es ergibt sich ein relativ schmales Richtdiagramm hoher Antennenleistung, bei dem, wie das Modulations-Diagramm 18 aus Figur 1 zeigt, eine Frequenzrampe 30 für eine gemeinsame Frequenz aller Radarsignale 5, 7, 9, 11, 13, 15, 17 durchfahren wird. Dabei wird die Anordnung 2 für ein FMCW-Modulationsverfahren und somit für ein Modulationsverfahren für ein frequenzmoduliertes Dauerstrichradar betrieben.

In dem Richtdiagramm 24 aus Figur 2 ist ein erster Erfassungsbereich 32 für eine Frequenz 30 für den ersten Betriebsmodus der Anordnung 2 dargestellt.

Figur 3 zeigt die Anordnung 2 aus Radar-Transceiver Chips 4, 6, 8, 10, 12, 14, 16 in einer zweiten Ausführungsform bei Durchführung eines zweiten Betriebsmodus in schematischer Darstellung. Hierbei ist vorgesehen, dass die ersten drei Chips 4, 6, 8 ihre Radarsignale 5, 7, 9 auf einer ersten Frequenz austauschen und somit empfangen und senden. In dem Modulations-Diagramm 18 aus Figur 3 ist hierzu eine erste Frequenzrampe 34 für diese erste Frequenz eingetragen. Der vierte und fünfte Chip 10, 12 tauschen ihre Radarsignale 11, 13 auf einer zweiten Frequenz aus, wobei eine zweite Frequenzrampe 36 für diese zweite Frequenz ebenfalls in dem Diagramm 18 eingetragen ist. Außerdem ist vorgesehen, dass der sechste und der siebte Chip 14, 16 Radarsignal 15, 17 auf einer dritten Frequenz austauschen, wobei eine dritte Frequenzrampe 38 für diese dritte Frequenz ebenfalls in dem Diagramm 18 dargestellt ist.

Das Richtdiagramm 24 aus Figur 4 zeigt die sich im zweiten Betriebsmodus der Anordnung 2 ergebenden Erfassungsbereiche 40, 42, 44. Hierbei ist links ein erster Erfassungsbereich 40 für die ersten drei Radarsignale 5, 7, 9, die auf der ersten Frequenz ausgetauscht werden, eingetragen. Ein zweiter Erfassungsbereich 42 in der Mitte des Richtdiagramms 24 wird durch Austausch des vierten und fünften Radarsignals 11, 13 auf der zweiten Frequenz bereitgestellt.

Das sechste und siebte Radarsignal 15, 17 werden auf der dritten Frequenz ausgetauscht. Hierzu zeigt das Richtdiagramm 24 aus Figur 4 rechts einen resultierenden dritten Erfassungsbereich 44.

## Patentansprüche

1. Verfahren zum Austausch von Radarsignalen (5, 7, 9, 11, 13, 15, 17), bei dem vorgesehen ist, dass für eine Anordnung (2), die eine Anzahl Radar-Transceiver Chips (4, 6, 8,10, 12, 14, 16) aufweist, für jeden Chip (4, 6, 8,10,12,14,16) ein Erfassungsbereich (32, 40, 42, 44) für Radarsignale (5, 7, 9, 11, 13, 15, 17) derart eingestellt wird, dass für die gesamte Anordnung (2) gleichzeitig mehrere Erfassungsbereiche (32, 40, 42, 44) für Radarsignale (5, 7, 9, 11, 13, 15, 17) abgedeckt werden, **dadurch gekennzeichnet, dass** mehrere Signalformen für Radarsignale (5, 7, 9, 11, 13, 15, 17) bearbeitet werden, und dass Frequenzen der Radarsignale (5, 7, 9, 11, 13, 15, 17) entkoppelt werden, wobei durch unterschiedliche Mittenfrequenzen einzelne Modulationsverfahren über Untergruppen aus Chips (4, 6, 8, 10, 12, 14, 16) gebildet werden, wobei jede Untergruppe eine eigene Richtcharakteristik aufweist, wobei Signale einzelner Untergruppen über Filter voneinander getrennt werden, so dass die resultierenden Richtcharakteristiken voneinander entkoppelt werden.

2. Verfahren nach Anspruch 1, bei dem für jeden Chip (4, 6, 8, 10, 12, 14, 16) ein Erfassungsbereich (32, 40, 42, 44) geschaltet wird.

3. Verfahren nach einem der voranstehenden Ansprüche, bei dem die Chips (4, 6, 8, 10, 12, 14, 16) funktionell zusammengeschaltet werden.

4. Verfahren nach einem der voranstehenden Ansprüche, bei dem die Erfassungsbereiche (32, 40, 42, 44) bei laufendem Betrieb der Anordnung (2) eingestellt werden.

5. Anordnung zum Austausch von Radarsignalen (5, 7, 9, 11, 13, 15, 17), die eine Anzahl Radar-Transceiver Chips (4, 6, 8, 10, 12, 14, 16) aufweist, wobei für jeden Chip (4, 6, 8, 10, 12, 14, 16) ein Erfassungsbereich (32, 40, 42, 44) für Radarsignale (5, 7, 9, 11, 13, 15, 17) derart einstellbar ist, dass für die gesamte Anordnung (2) gleichzeitig mehrere Erfassungsbereiche (32, 40, 42, 44) für Radarsignale (5, 7, 9, 11, 13, 15, 17) abdeckbar sind, **dadurch gekennzeichnet, dass** mehrere Signalformen für Radarsignale (5, 7, 9, 11, 13, 15, 17) zu bearbeiten sind, und dass Frequenzen der Radarsignale (5, 7, 9, 11, 13, 15, 17) zu entkoppeln sind, wobei durch unterschiedliche Mittenfrequenzen einzelne Modulationsverfahren über Untergruppen aus Chips (4, 6, 8, 10, 12, 14, 16) zu bilden sind, wobei jede Untergruppe eine eigene Richtcharakteristik aufweist, wobei Signale einzelner Untergruppen über Filter voneinander zu trennen sind, so dass die resultierenden Richtcharakteristiken voneinander zu entkoppeln sind.

6. Anordnung nach Anspruch 5, die zum Senden von Radarsignalen (5, 7, 9, 11, 13, 15, 17) ausgebildet ist.

7. Anordnung nach Anspruch 5 oder 6, die zum Empfangen von Radarsignalen (5, 7, 9, 11, 13, 15, 17) ausgebildet ist.

8. Computerprogramm mit Programmcodemitteln, um alle Schritte eines Verfahrens nach einem der Ansprüche 1 bis 4 durchzuführen, wenn das Computerprogramm auf einem Computer oder einer entsprechenden Recheneinheit, insbesondere in einer Anordnung (2) nach einem der Ansprüche 5 bis 7, ausgeführt wird.

9. Computerprogrammprodukt mit Programmcodemitteln, die auf einem computerlesbaren Datenträger gespeichert sind, um alle Schritte eines Verfahrens nach einem der Ansprüche 1 bis 4 durchzuführen, wenn das Computerprogramm auf einem Computer oder einer entsprechenden Recheneinheit, insbesondere in einer Anordnung (2) nach einem der Ansprüche 5 bis 7, ausgeführt wird.

## Claims

1. Method for the interchange of radar signals (5, 7, 9, 11, 13, 15, 17), in which provision is made for an arrangement (2) which has a number of radar transceiver chips (4, 6, 8, 10, 12, 14, 16) to have a detection range (32, 40, 42, 44) for radar signals (5, 7, 9, 11, 13, 15, 17) set for each chip (4, 6, 8, 10, 12, 14, 16) such that a plurality of detection ranges (32, 40, 42, 44) for radar signals (5, 7, 9, 11, 13, 15, 17) are covered for the entire arrangement (2) simultaneously, **characterized in that** a plurality of signal forms for radar signals (5, 7, 9, 11, 13, 15, 17) are handled, and **in that** frequencies of the radar signals (5, 7, 9, 11, 13, 15, 17) are decoupled, wherein different centre frequencies form individual modulation methods using subgroups of chips (4, 6, 8, 10, 12, 14, 16), wherein each subgroup has a separate directional characteristic, wherein signals from individual subgroups are separated from one another by means of filters, so that the resulting directional characteristics are decoupled from one another.

2. Method according to Claim 1, in which a detection range (32, 40, 42, 44) is engaged for each chip (4, 6, 8, 10, 12, 14, 16).

3. Method according to one of the preceding claims, in which the chips (4, 6, 8, 10, 12, 14, 16) are functionally interconnected.

4. Method according to one of the preceding claims, in which the detection ranges (32, 40, 42, 44) are set in the course of operation of the arrangement (2).

5. Arrangement for the interchange of radar signals (5, 7, 9, 11, 13, 15, 17) which has a number of radar transceiver chips (4, 6, 8, 10, 12, 14, 16), wherein each chip (4, 6, 8, 10, 12, 14, 16) can have a detection range (32, 40, 42, 44) for radar signals (5, 7, 9, 11, 13, 15, 17) set such that a plurality of detection ranges (32, 40, 42, 44) for radar signals (5, 7, 9, 11, 13, 15, 17) can be covered for the entire arrangement (2) simultaneously, **characterized in that** a plurality of signal forms for radar signals (5, 7, 9, 11, 13, 15, 17) can be handled, and **in that** frequencies of the radar signals (5, 7, 9, 11, 13, 15, 17) can be decoupled, wherein different centre frequencies can form individual modulation methods using subgroups of chips (4, 6, 8, 10, 12, 14, 16), wherein each subgroup has a separate directional characteristic, wherein signals from individual subgroups can be separated from one another by means of filters, so that the resulting directional characteristics can be decoupled from one another.

6. Arrangement according to Claim 5 which is designed to send radar signals (5, 7, 9, 11, 13, 15, 17).

7. Arrangement according to Claim 5 or 6 which is designed to receive radar signals (5, 7, 9, 11, 13, 15, 17).

8. Computer program having program code means in order to perform all the steps of a method according to one of Claims 1 to 4 when the computer program is executed on a computer or an appropriate computation unit, particularly in an arrangement (2) according to one of Claims 5 to 7.

9. Computer program product having program code means which are stored on a computer-readable data storage medium in order to perform all the steps of a method according to one of Claims 1 to 4 when the computer program is executed on a computer or an appropriate computation unit, particularly in an arrangement (2) according to one of Claims 5 to 7.

## Revendications

1. Procédé pour échanger des signaux radar (5, 7, 9, 11, 13, 15, 17), selon lequel il est prévu que pour un arrangement (2), lequel présente un certain nombre de puces d'émission/réception radar (4, 6, 8, 10, 12, 14, 16), une zone de détection (32, 40, 42, 44) des signaux radar (5, 7, 9, 11, 13, 15, 17) est réglée pour chaque puce (4, 6, 8, 10, 12, 14, 16) de telle sorte que plusieurs zones de détection (32, 40, 42, 44) des signaux radar (5, 7, 9, 11, 13, 15, 17) sont couvertes simultanément pour la totalité de l'arrangement (2), **caractérisé en ce que** plusieurs formes de signal des signaux radar (5, 7, 9, 11, 13, 15, 17) sont traitées, et **en ce que** les fréquences des signaux radar (5, 7, 9, 11, 13, 15, 17) sont découplées, des procédés de modulation individuels étant formés sur des sous-groupes de puces (4, 6, 8, 10, 12, 14, 16) par des fréquences centrales différentes, chaque sous-groupe présentant une caractéristique directionnelle propre, les signaux des sous-groupes individuels étant séparés les uns des autres par de sorte que les caractéristiques directionnelles résultantes sont découplées les unes des autres.

2. Procédé selon la revendication 1, selon lequel une zone de détection (32, 40, 42, 44) est commutée pour chaque puce (4, 6, 8, 10, 12, 14, 16).

3. Procédé selon l'une des revendications précédentes, selon lequel les puces (4, 6, 8, 10, 12, 14, 16) sont interconnectées de manière fonctionnelle.

4. Procédé selon l'une des revendications précédentes, selon lequel les zones de détection (32, 40, 42, 44) sont réglées en cours de fonctionnement de l'arrangement (2).

5. Arrangement pour échanger des signaux radar (5, 7, 9, 11, 13, 15, 17), lequel présente un certain nombre de puces d'émission/réception radar (4, 6, 8, 10, 12, 14, 16), une zone de détection (32, 40, 42, 44) des signaux radar (5, 7, 9, 11, 13, 15, 17) pouvant être réglée pour chaque puce (4, 6, 8, 10, 12, 14, 16) de telle sorte que plusieurs zones de détection (32, 40, 42, 44) des signaux radar (5, 7, 9, 11, 13, 15, 17) peuvent être couvertes simultanément pour la totalité de l'arrangement (2), **caractérisé en ce que** plusieurs formes de signal des signaux radar (5, 7, 9, 11, 13, 15, 17) doivent être traitées, et **en ce que** les fréquences des signaux radar (5, 7, 9, 11, 13, 15, 17) doivent être découplées, des procédés de modulation individuels devant être formés sur des sous-groupes de puces (4, 6, 8, 10, 12, 14, 16) par des fréquences centrales différentes, chaque sous-groupe présentant une caractéristique directionnelle propre, les signaux des sous-groupes individuels devant être séparés les uns des autres par des filtres de sorte que les caractéristiques directionnelles résultantes doivent être découplées les unes des autres.

6. Arrangement selon la revendication 5, lequel est configuré pour émettre des signaux radar (5, 7, 9, 11, 13, 15, 17).

7. Arrangement selon la revendication 5 ou 6, lequel est configuré pour recevoir des signaux radar (5, 7, 9, 11, 13, 15, 17).

8. Programme informatique comprenant des moyens de code de programme pour exécuter toutes les étapes d'un procédé selon l'une des revendications 1 à 4 lorsque le programme informatique est exécuté sur un ordinateur ou sur une unité de calcul correspondante, notamment dans un arrangement (2) selon l'une des revendications 5 à 7.

9. Produit programme informatique comprenant des moyens de code de programme qui sont enregistrés sur un support de données lisible par un ordinateur, pour exécuter toutes les étapes d'un procédé selon l'une des revendications 1 à 4 lorsque le programme informatique est exécuté sur un ordinateur ou sur une unité de calcul correspondante, notamment dans un arrangement (2) selon l'une des revendications 5 à 7.
